# EUROPEAN PATENT SPECIFICATION

(11) **EP 4 378 845 B1**
(45) Date of publication and mention of the grant of the patent: **20.08.2025**
(21) Application number: 23209428.4
(22) Date of filing: 13.11.2023
(51) Int. Cl.: A23B 70/30

(54) **DEVICE FOR CREATING A BACKPRESSURE IN A FLUID LINE**
VORRICHTUNG ZUR ERZEUGUNG EINES GEGENDRUCKS IN EINER FLUIDLEITUNG
DISPOSITIF POUR CRÉER UNE CONTRE-PRESSION DANS UNE CONDUITE DE FLUIDE

(30) Priority: 30.11.2022 EP 22210707
(43) Date of publication of application: 05.06.2024
(73) Proprietor: Tetra Laval Holdings & Finance S.A., 1009 Pully (CH)
(72) Inventor: FOLKESSON, Ellinor, 22186 Lund (SE); BERLING, Niklas, 22186 Lund (SE)
(74) Representative: Tetra Pak Patent Attorneys

(56) References cited:
- EP-B1- 0 171 735
- DE-C2- 3 414 747
- US-A- 3 041 185
- US-A- 3 138 178
- US-A- 4 861 559

## Description

### Technical Field

The invention relates to a device for creating a backpressure in a fluid line configured to convey a food product containing particles. The invention further relates to a method for creating a backpressure in said fluid line configured to convey said food product. The invention further relates to a system for processing a food product containing particles. The invention further relates to a method for processing said food product.

### Background Art

In food processing technologies, a liquid food passes through various lines. In some of the lines, a temperature of such liquid food may be very high e.g. above 100 °C. An example of such food processing technologies is the ultra-high temperature (UHT) processing. At such high temperatures, it is required to prevent the liquid food from boiling in the line, as boiling may adversely affect the properties of the liquid food. Therefore, a counter pressure is required to prevent the liquid food from boiling. A conventional solution of creating the counter pressure is to reduce a through-gap of the line that the liquid food passes through e.g. by a valve that adjusts the line through-gap.

However, such solution may not be applicable for liquid foods which contain particles since the particles may block the valve and/or the particles may be destroyed when passing through the valve, as they may collide with one another. Therefore, there is a need for a new device for creating a counter pressure in the lines configured to pass the liquid food containing particles. Furthermore, there is a need for a new method for creating the counter pressure in such device. EP 0 171 735, US 4 861 559, US 3 138 178 and US 3 041 185 show systems and methods for sterilizing and filling liquids containing particulate material wherein boiling in the fluid line of the system is avoided through pressure control.

### Summary

It is an object of the invention to at least partly overcome one or more of the above-identified limitations of the prior art. In particular, it is an object of the invention to provide a device for creating a backpressure in a fluid line configured to convey a food product containing particles that protects the device from becoming blocked by the particles and that protects the particles of the food product from being destroyed. It is another object of the invention to provide a method for creating a backpressure in a fluid line configured to convey a food product containing particles in accordance with the device. It is yet another object of the invention to provide a system for processing a food product containing particles that protects the system from becoming blocked by the particles and that protects the particles from being destroyed. It is yet another object of the invention to provide a method for processing a food product containing particles in accordance with the system.

According to a first aspect of the invention, a device is provided. The device is configured for creating a backpressure in a fluid line configured to convey a food product containing particles. The device further comprises a first channel comprising an inlet and an outlet for conveying the product in a first direction. The device comprises a second channel comprising an inlet and an outlet in fluid communication with the first channel, for receiving a part of the product from the first channel and thereafter returning said part to the first channel. The device further comprises a filtering section arranged at the inlet of the second channel and configured to let through said part of the product from the first channel into the second channel, while blocking the particles contained in the food product. The device further comprises a flow redirecting section arranged at the outlet of the second channel and configured to redirect said part of the product in a second direction when said part is returned to the first channel from the second channel. The second direction is at least partially opposite to the first direction for creating the backpressure in the fluid line.

The inlet of the first channel receives the food product containing the particles and conveys the food product, containing the particles, towards the outlet of the first channel in the first direction. The inlet of the second channel which is in fluid communication with the first channel receives the part of the product which has passed through the filtering section, arranged at the inlet of the second channel. Thereby, the filtering section blocks the particles contained in the food product from entering the second channel. Hence, the second channel receives and conveys the part of the product which does not contain any particles or at least contains less particles with sizes smaller than openings or holes of the filtering section. Hence, a remaining part of the food product i.e. the part not received by the second channel continues to flow or pass through the first channel.

The part of the product, received and conveyed in the second channel, returns from the outlet of the second channel to the first channel, as the outlet of the second channel is in fluid communication with the first channel. The part of the product returns from the outlet of the second channel to the first channel in the second direction which is partially opposite to the first direction by means of the flow redirecting section arranged at the outlet of the second channel.

The device is advantageous in that it creates the backpressure in the fluid line and hence prevents the food product containing the particles from boiling in the fluid line. The back pressure may be empirically chosen so as to prevent the food product containing the particles from boiling in the fluid line. In addition, the device is advantageous in that the back pressure is created by the part of the product that does not contain any particles or at least contains less particles with sizes smaller than openings or holes of the filtering section. Thereby, all particles of the food product or at least most particles of the food product i.e. those particles having sizes larger than the openings or holes of the filtering section which are blocked by the filtering section, do not contribute to the creation of the back pressure. This in turn allows for protecting all particles of the food product or at least most particles of the food product i.e. those particles having sizes larger than the openings or holes of the filtering section which are blocked by the filtering section from colliding with one another and from being destroyed.

In addition, the device is advantageous in that it provides a simple and a user-friendly solution, compared to the conventional valve solution. This is because the device of the invention does not require any valves and hence the device of the invention do not have the problems of the conventional solution that the particles may block the valve and the valve may require a repair or a maintenance. Instead, in the device of the invention, the particles blocked by the filtering section pass through the first channel and hence do not block the fluid line.

The food product may comprise any of or any combination of milk, juice, yoghurt, plant based beverage, soup or any other liquid or semi liquid product that is consumed as food by humans or animals. The particles may be fruits, nuts, grains, seeds, vegetable, meat, or any other particle that is consumed as food by humans or animals, inherently having a size of 0.2 to 30 mm or cut to pieces having a size in the range of 0.2 to 30 mm. The first direction may be a direction of transportation of the food product in the first channel at the location of the outlet of the second channel.

The flow redirecting section may comprise a flow redirecting surface. The flow redirecting surface may be configured to redirect the part of the product returned from the second channel into the first channel in the second direction.

The flow redirecting surface may allow for redirecting the part of the product returned from the second channel into the first channel in the second direction being at least partially opposite to the first direction. Thereby, the flow redirecting surface may allow for creating the backpressure in the fluid line and may hence prevent the food product, containing the particles, from boiling in the fluid line.

The flow redirecting surface may be arranged with an angle in the range of 0 to 45 degrees with respect to the first direction at the location of the outlet of the second channel.

Thereby, the second direction may vary from being completely opposite to the first direction to being partially opposite to the first direction with an angle of 45 degrees with respect to the first direction at the location of the outlet of the second channel. The angle of 0 to 45 degrees may allow for redirecting the part of the product in the desired second direction when the part returns to the first channel from the second channel. This may in turn allow for creating the desired backpressure in the fluid line.

The size of the smallest cross-sectional through flow area of the second channel may be in the range of 20% to 50% of the size of the smallest cross-sectional through flow area of the first channel.

The ratio of the size of the smallest cross-sectional through flow area of the second channel with respect to the size of the smallest cross-sectional through flow area of the first channel may allow for creating various backpressures in the fluid line. The size of the smallest cross-sectional through flow area of the second channel being in the range of 20% to 50% of the size of the smallest cross-sectional through flow area of the first channel may allow for creating the desired backpressure in the fluid line.

The filtering section may comprise a plurality of openings of which each has, in at least one direction of the respective opening, an extension of at most 4 mm.

The filtering section may be a surface comprising a plurality of openings. The filtering section may comprise a filtering device. The filtering section may comprise a strainer, a sieve, a mesh or any other suitable filtering device. The filtering section may comprise any material suitable for the food product. The filtering section may be arranged with an angle in the range of, for example, 20 to 70 degrees with respect to a direction of the food product at the location of the inlet of the second channel. This may in turn facilitate the part of the food product to flow from the first channel into the second channel.

The second channel may be arranged inside the first channel. The second channel may be defined by at least one partition wall that separates the second channel from the first channel.

It is an advantage that the second channel may not require extra space, as it may be arranged inside the first channel. This in turn may allow for a simple and compact device for creating the backpressure in the fluid line configured to convey the food product containing particles.

The flow redirecting section may be arranged adjacent to the outlet of the second channel and with a distance of 10 to 30 mm to the second channel, as seen along the first direction.

Thereby, the distance in the range of 10 to 30 mm between the flow redirecting section and the second channel, along the first direction, may be suitable for creating the desired backpressure in the fluid line when conveying the food product in the fluid line. The distance of in the range of 10 to 30 mm between the flow redirecting section and the second channel, along the first direction, may be suitable when e.g. cleaning the fluid line. The cleaning of the fluid line may be performed by a cleaning-in-place (CIP) system. A cleaning process may require conveying water and a cleaning solution e.g. a detergent in the fluid line. The distance of in the range of 10 to 30 mm, during the cleaning process of the fluid line, may be advantageous as it may allow for decreasing the backpressure in the fluid line. Hence, it may allow for a higher flow rate of the cleaning solution in the fluid line and a more efficient cleaning.

The device may further comprise an actuator. The actuator may be connected to the partition wall for moving the partition wall between a first position and a second position, such that a distance between the outlet of the second channel and the flow redirecting section is greater when the partition wall is in the second position, as compared to when the partition wall is in the first position.

Thereby, the actuator may allow for varying the distance between the flow redirecting section and the second channel along the first direction. This may in turn allow for adjusting the distance to a lower range when conveying the food product in the fluid line to create the desired backpressure in the fluid line. This may in turn also allow for adjusting the distance to a higher range when performing the cleaning process in the fluid line to obtain a more efficient cleaning.

The device may comprise a pipe in which the partition wall is located. The partition wall is, as seen across the first direction, smaller than the pipe, such that the second channel is formed by an interspace between the pipe and an exterior surface of the partition wall. The partition wall may comprise an interior through-flow opening that forms the first channel.

For instance, the device may comprise a first tube and a second tube in which the second tube, as seen across the first direction, smaller than the first tube i.e. a double tube. The interior through-flow opening of the second tube may form the first channel. The interspace between the first channel and the second channel may form the second channel. This may in turn provide a simple and compact device for creating the backpressure in the fluid line configured to convey the food product containing particles.

The filtering section may extend from the partition wall, in a direction towards the pipe at the inlet of the second channel.

In the case of the double tube, the filtering section may extend from an end of the second tube, being the inlet of the second channel, in a direction towards the first tube. The filtering section may be arranged with an angle with respect to a direction of the food product at the location of the inlet of the second channel. This may in turn facilitate the part of the food product to flow from the first channel into the second channel.

The flow redirecting section my arranged on an interior surface of the pipe.

The flow redirecting section may extend from the pipe, in a direction towards the partition wall at the outlet of the second channel. In the case of the double tube, the flow redirecting section may extend from the first tube in a direction towards another end of the second tube, being the outlet of the second channel.

The device may comprise a first pipe that forms the first channel and an adjacent second pipe that forms the second channel. The second pipe may comprise at its outlet a part that forms the flow redirecting section.

The device may comprise two pipes e.g. two tubes, arranged adjacent to one another such that the inlet and the outlet of the second pipe are in fluid communication with the first pipe. It is an advantage that at least the second pipe may be accessible individually. This may be advantages when needing to e.g. repair the second pipe without needing to open the first pipe.

According to a second aspect of the invention, a system is provided. The system is configured for processing a food product containing particles. The system comprises a pump for feeding the product to a food processing arrangement. The system further comprises the food processing arrangement configured to process the food. The system further comprises a device according to the first aspect of the invention for creating a backpressure in the food processing arrangement.

The pump may be any conventional and commercially available pump, suitable for the processing of the food product containing particles. The system allows for protecting the system from becoming blocked by the particles of the food product and protecting the particles of the food product from being destroyed. This aspect may generally present the same or similar advantages, as those defined in relation to the first aspect.

According to a third aspect of the invention a method is provided. The method is provided for creating a backpressure in a fluid line configured to convey a food product containing particles. The method comprises conveying the product in a first direction in a first channel that has an inlet and an outlet. The method further comprises receiving, with a second channel that has an inlet and an outlet in fluid communication with the first channel, a part of the product from the first channel and thereafter returning said part to the first channel. The method further comprises letting through, during the receiving of said part of the product and via a filtering section arranged at the inlet of the second channel, said part of the product from the first channel into the second channel, while blocking particles contained in the product. The method further comprises redirecting, with a flow redirecting section arranged at the outlet of the second channel, said part of the product in a second direction when said part is returned to the first channel from the second channel. The second direction is at least partially opposite to the first direction for creating the backpressure in the fluid line.

The method may be performed using the device defined according to the first aspect of the invention. This aspect may generally present the same or similar advantages, as those defined in relation to the first aspect.

According to a fourth aspect of the invention a method is provided. The method is provided for processing a food product containing particles. The method comprises pumping the product to a food processing arrangement. The method further comprises processing the food in the food processing arrangement. The method further comprises creating a backpressure in the food processing arrangement by performing the method according to the third aspect of the invention.

The method may be performed using the system defined according to the second aspect of the invention. This aspect may generally present the same or similar advantages, as those defined in relation to the second aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a cross sectional side view of a device for creating a backpressure in a fluid line comprising a second channel arranged inside a first channel, defined by a partition wall, wherein the partition wall is in a first position,
Fig. 2 is a cross sectional side view of the device shown in Fig.1 wherein the partition wall is in a second position,
Fig. 3 is a cross sectional side view of another device for creating a backpressure in a fluid line comprising a second channel arranged adjacent to a first channel,
Fig. 4 is a schematic illustration of a system for processing a food product containing particles,
Fig. 5 is a schematic illustration of steps of a method for creating a backpressure in a fluid line configured to convey a food product containing particles, and
Fig. 6 is a schematic illustration of steps of a method for processing a food product containing particles.

### Detailed Description

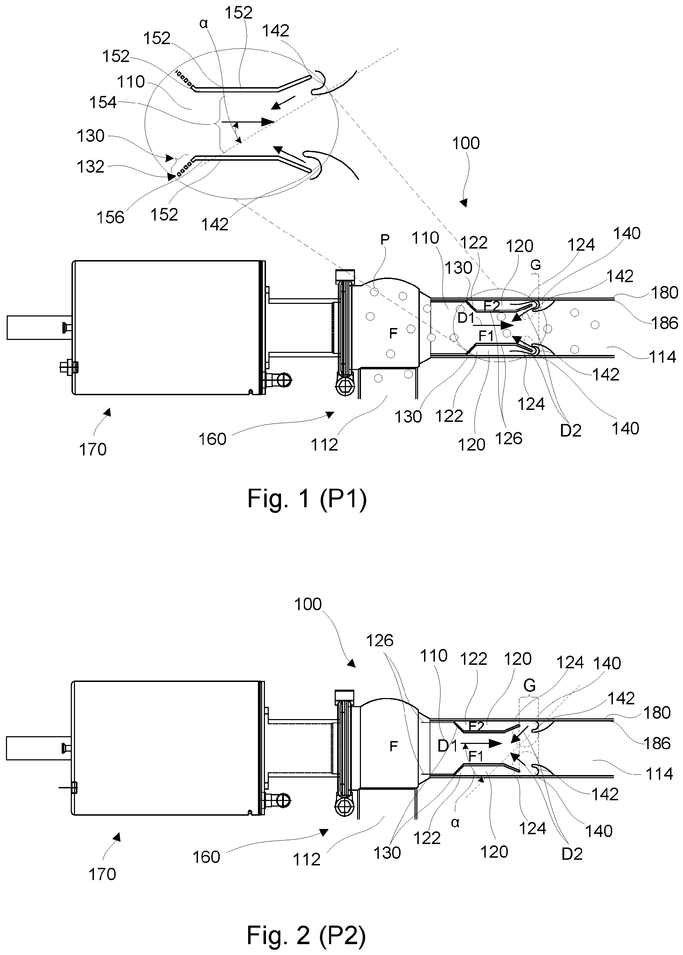

Figs. 1, 2 and 3 are cross sectional side views of a device 100 for creating a backpressure in a fluid line 160. The fluid line 160 is configured to convey a food product F containing particles P. The fluid line 160 may be connected to other lines. The fluid line 160 may a part of a system 200 for processing a food product F. The particles P may have any shapes such as a spherical shape or a cubic shape. The particles P may have a size larger than 4 mm. At least a dimension of the particles P may be larger than 4 mm. For instance, a dimeter of the particles P may be larger than 4 mm.

The device 100 comprises a first channel 110. The first channel 110 comprises an inlet 112 and an outlet 114 for conveying the product F in a first direction D1. The device 100 further comprises a second channel 120. The second channel 120 comprises an inlet 122 and an outlet 124. The inlet 122 and the outlet 124 of the second channel 120 are in fluid communication with the first channel 110. The second channel 120 receives a part F2 of the product F from the first channel 110. The second channel 120 receives the part F2 of the product F from the first channel 110 at the inlet 122 of the second channel 120. A remaining part F1 of the product F i.e. the part not received by the second channel 120 passes through the first channel 110. The second channel 120 thereafter returns the part F2 of the product F to the first channel 110. The second channel 120 thereafter returns the part F2 of the product F to the first channel 110 at the outlet 124 of the second channel 120. The first channel 110 may convey another part F1 of the food product F in

The size of the smallest cross-sectional through flow area of the second channel 120 is in the range of 20% to 50% of the size of the smallest cross-sectional through flow area of the first channel 110. The smallest cross-sectional through flow area of the second channel 120 may, for example, be in the range of 4 to 100 cm². The smallest cross-sectional through flow area of the first channel 110 may, for example, be in the range of 4 to 400 cm².

The device 100 further comprises a filtering section 130. The filtering section 130 may be referred to as a perforated section and comprises openings for letting liquid product pass the filtering section 130, while blocking larger particles, such as particles having a size larger than 5 mm. The filtering section 130 is arranged at the inlet 122 of the second channel 120. The filtering section 130 is configured to let through the part F2 of the product F from the first channel 110 into the second channel 120. The filtering section 130 is configured to block the particles P contained in the food product F. The filtering section 130 may comprise a plurality of openings 132. Each of the plurality of openings 132 may have, in at least one direction of the respective opening 132, an extension of at most 4 mm.

The device 100 further comprises a flow redirecting section 140. The flow redirecting section 140 is arranged at the outlet 124 of the second channel 120. The flow redirecting section 140 is configured to redirect the part F2 of the product F in a second direction D2 when the part F2 is returned to the first channel 110 from the second channel 120. The second direction D2 is at least partially opposite to the first direction D1, thereby creating the backpressure in the fluid line 160. The flow redirecting section 140 comprises a flow redirecting surface 142. The flow redirecting surface 142 may be configured to redirect the part F2 of the product F returned from the second channel 120 into the first channel 110 in the second direction D2. The flow redirecting surface 142 may be arranged with an angle α with respect to the first direction D1 at the location of the outlet 124 of the second channel 120. The angle may be in the range of 0 to 45 degrees. The flow redirecting section 140 may have a circular shape, just like the outlet 124,

The second channel 120 is arranged inside the first channel 110. The second channel 120 may be defined by at least one partition wall 150 that separates the second channel 120 from the first channel 110. The second channel 120 may be defined by more than one partition wall 150 such two or three partition walls 150. Fig. 1 also shows a magnified view of a part of the device 100. The magnified view shows that the at least one partition wall has an exterior surface 152 and an interior surface 156.

The flow redirecting section 140 is arranged adjacent to the outlet 124 of the second channel 120. A distance G between the flow redirecting section 140 and the second channel 120 may be of 10 to 30 mm, as seen along the first direction D1. The distance G may be adjusted by means of an actuator 170. The device 100 further comprises an actuator 170. The actuator 170 may be connected to the partition wall 150 e.g. connected to an end of the partition wall 150. The actuator 170, connected to the partition wall 150, may move the partition wall 150 between a first position P1 and a second position P2. The distance G between the outlet 124 of the second channel 120 and the flow redirecting section 140 may be greater when the partition wall 150 is in the second position P2, as compared to when the partition wall 150 is in the first position P1. Fig. 1 shows that the partition wall 150 of the device 100 is in the first position P1. Fig. 2 shows that the partition wall 150 of the device 100 is in the second position P2. The distance G shown in Fig. 1 is smaller than the distance G shown in Fig. 2, along the first direction D1.

The device 100 comprises a pipe 180 in which the partition wall 150 is located. The pipe 180 may have an interior surface 186. The flow redirecting section 140 may be arranged on the interior surface 186 of the pipe 180. The flow redirecting section 140 may be arranged on and in contact with a portion of the interior surface 186 of the pipe 180. Figs. 1 and 2 show a cross sectional view of a pipe 180 and the partition wall 150. The partition wall 150 is, as seen across the first direction D1, smaller than the pipe 180. The second channel 120 is formed by an interspace between the pipe 180 and the exterior surface 152 of the partition wall 150. The partition wall 150 may comprises an interior through-flow opening 154 that forms the first channel 110. The filtering section 130 extends from the partition wall 150, in a direction towards the pipe 180. The filtering section 130 may be arranged with an angle in the range of 20 to 70 degrees with respect to a direction of the food product at the location of the inlet 122 of the second channel 120.

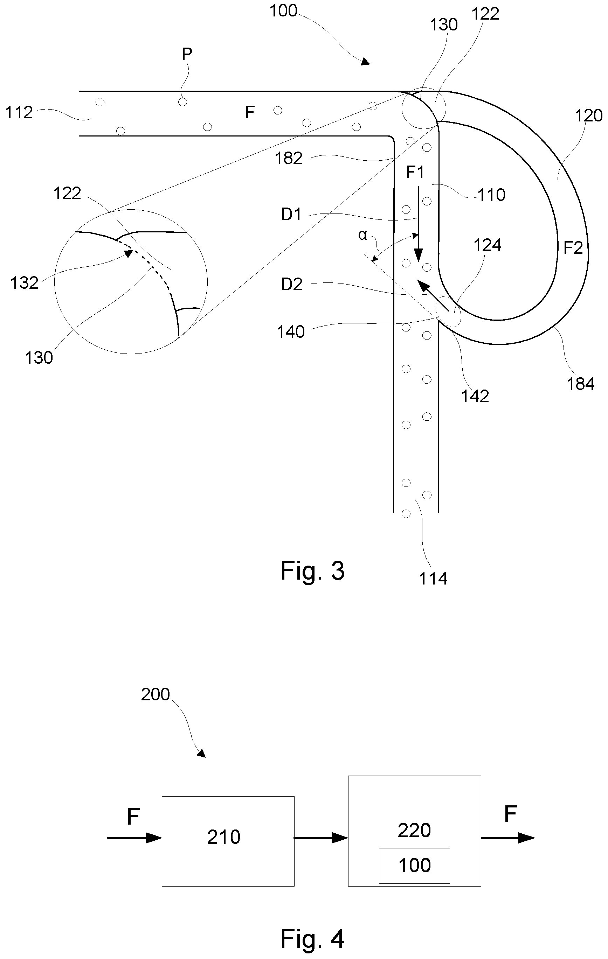

Fig. 3 shows a cross sectional side view of another device 100 for creating a backpressure in a fluid line. This device 100 comprises a first pipe 182. The first pipe 182 is a bend pipe. The first pipe 182 may not be a bend pipe. The first part 182 may form the first channel 110. The first channel comprises an inlet 112 and an outlet 114 for conveying the product F in a first direction D1.

The device 100 comprises an adjacent second pipe 184. The adjacent second pipe 184 may form the second channel 120. The second pipe 184 is a bend pipe. The second channel 120 comprises an inlet 122 and an outlet 124. The inlet 122 and the outlet 124 of the second channel 120 are in fluid communication with the first channel 110. The second channel 120 receives a part F2 of the product F from the first channel 110. The second channel 120 thereafter returns the part F2 to the first channel 110. The size of the smallest cross-sectional through flow area of the second channel 120 may be in the range of 20 to 50% of the size of the smallest cross-sectional through flow area of the first channel 110.

The device 100 comprises a filtering section 130. The filtering section 130 is arranged at the inlet 122 of the second channel 120. The filtering section 130 is configured to let through the part F2 of the product F from the first channel 110 into the second channel 120. The filtering section 130 is configured to block the particles P contained in the food product F. A remaining part F1 of the product F i.e. the part not received by the second channel 120 passes through the first channel 110. The filtering section 130 comprises a plurality of openings 132. Each of the plurality of openings 132 may have, in at least one direction of the respective opening 132, an extension of at most 4 mm.

Fig. 3 further shows that the device comprises a flow redirecting section 140. The flow redirecting section 140 is arranged at the outlet 124 of the second channel 120. The flow redirecting section 140 is configured to redirect the part F2 of the product F in a second direction D2 when the part F2 is returned to the first channel 110 from the second channel 120. The second direction D2 is at least partially opposite to the first direction D1, thereby creating the backpressure in the fluid line 160. The second pipe 184 comprises at its outlet 124 a part 142 that forms the flow redirecting section 140. The part 142 may be a portion of the second pipe 184. The flow redirecting section 140 may comprise a flow redirecting surface 142. The flow redirecting surface 142 may be configured to redirect the part F2 of the product F returned from the second channel 120 into the first channel 110 in the second direction D2. The flow redirecting surface 142 is arranged with an angle α with respect to the first direction D1 at the location of the outlet 124 of the second channel 120. The angle α may be in the range of 0 to 45 degrees.

Fig. 4 shows a schematic illustration of a system 200 for processing a food product F containing particles P. The system 200 comprises a pump 210. The system 200 comprises also a food processing arrangement 220. The pump 210 is arranged upstream the food processing arrangement 220. The pump 210 is configured for feeding the product F to the food processing arrangement 220. The food processing arrangement 220 is configured to process the food F. The system 200 comprises a device 100 that is arranged in the food processing arrangement 220. The device 100 may be similar to the devices 100 shown in Figs. 1 and 2. The device 100 may be similar to the device 100 shown in Fig. 3. The device 100 creates a backpressure in the food processing arrangement 220. The food processing arrangement 220 may be a heat treatment unit, and the device 100 may arranged downstream the heat treatment unit to ensure that a certain pressure is maintained in the heat treatment unit.

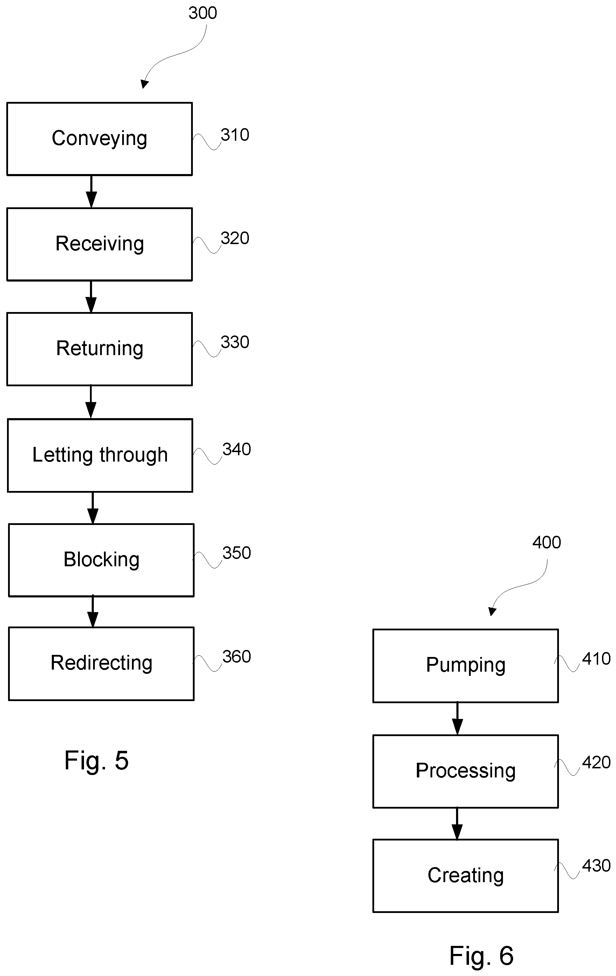

Fig. 5 is a schematic illustration of steps of a method 300 for creating a backpressure in a fluid line 160. The fluid line 160 is configured to convey a food product F containing particles P. The method 300 comprises conveying 310 the product F in a first direction D1 in a first channel 110 that has an inlet 112 and an outlet 114. The method 300 comprises receiving 320, with a second channel 120 that has an inlet 122 and an outlet 124 in fluid communication with the first channel 110, a part F2 of the product F from the first channel 110. The step of receiving 320 may be performed subsequent to the step of conveying 310. The step of receiving 320 may be performed simultaneously with the step of conveying 310.

The method 300 comprises thereafter returning 330 the part F2 from the second channel 120 to the first channel 110. The method 300 comprises letting through 340, during the receiving 320 of said part F2 of the product F and via a filtering section 130 arranged at the inlet 122 of the second channel 120, the part F2 of the product F from the first channel 110 into the second channel 120. The method 300 comprises blocking 350 the particles P contained in the product F1 while letting through 340 the part F2 of the product F from the first channel 110 into the second channel 120. The steps of letting through 340, blocking 350 and receiving 320 may be performed simultaneously.

The method 300 comprises redirecting 360, with a flow redirecting section 140 arranged at the outlet 124 of the second channel 120, the part F2 of the product F in a second direction D2 when the part F2 is returned to the first channel 110 from the second channel 120. The second direction D2 is at least partially opposite to the first direction D1, thereby creating the backpressure in the fluid line 160. The step of redirecting 360 may be performed simultaneously with the step of returning 330. The method 300 may be performed by means of the devices shown in Figs. 1 and 2. Alternatively, the method 300 may be performed by means of the device shown in Fig. 3.

Fig. 6 is a schematic illustration of steps of a method 400 for processing a food product F containing particles P. The method 400 comprises pumping 410 the product F to a food processing arrangement 220. The method 400 comprises processing 420 the food F in the food processing arrangement 220. The method 400 comprises creating 430 a backpressure in the food processing arrangement 220. The step of creating 430 the backpressure may be performed using the method 300 shown in Fig. 5. The step of processing 420 may be performed subsequent to the step of pumping 410. The step of creating 430 may be performed subsequent to the step of processing 420. The step of creating 430 may be performed simultaneously with the step of processing 420. The method 400 may be performed by means of the system 200 shown in Fig. 4.

From the description above follows that, although various embodiments of the invention have been described and shown, the invention is not restricted thereto, but may also be embodied in other ways within the scope of the subject-matter defined in the following claims.

## Claims

1. A device (100) for creating a backpressure in a fluid line (160) configured to convey a food product (F) containing particles (P), the device (100) comprising:
a first channel (110) comprising an inlet (112) and an outlet (114) for conveying the product (F) in a first direction (D1),
a second channel (120) comprising an inlet (122) and an outlet (124) in fluid communication with the first channel (110), for receiving a part (F2) of the product (F) from the first channel (110) and thereafter returning said part (F2) to the first channel (110),
a filtering section (130) arranged at the inlet (122) of the second channel (120) and configured to let through said part (F2) of the product (F) from the first channel (110) into the second channel (120), while blocking particles (P) contained in the product (F), and
a flow redirecting section (140) arranged at the outlet (124) of the second channel (120) and configured to redirect said part (F2) of the product (F) in a second direction (D2) when said part (F2) is returned to the first channel (110) from the second channel (120), wherein the second direction (D2) is at least partially opposite to the first direction (D1) for creating the backpressure in the fluid line (160).

2. The device (100) according to claim 1, wherein the flow redirecting section (140) comprises a flow redirecting surface (142), the flow redirecting surface (142) being configured to redirect the part (F2) of the product (F) returned from the second channel (120) into the first channel (110) in the second direction (D2).

3. The device (100) according to claim 2, wherein the flow redirecting surface (142) is arranged with an angle (α) in the range of 0 to 45 degrees with respect to the first direction (D1) at the location of the outlet (124) of the second channel (120).

4. The device (100) according to any of the preceding claims, wherein the size of the smallest cross-sectional through flow area of the second channel (120) is in the range of 20% to 50% of the size of the smallest cross-sectional through flow area of the first channel (110).

5. The device (100) according to any of the preceding claims, wherein the filtering section (130) comprises a plurality of openings (132) of which each has, in at least one direction of the respective opening (132), an extension of at most 4 mm.

6. The device (100) according to any of the preceding claims, wherein the second channel (120) is arranged inside the first channel (110) and is defined by at least one partition wall (150) that separates the second channel (120) from the first channel (110).

7. The device (100) according to claim 6, wherein the flow redirecting section (140) is arranged adjacent to the outlet (124) of the second channel (120) and with a distance (G) of 10 to 30 mm to the second channel (120), as seen along the first direction (D1).

8. The device (100) according to claim 6 or 7, comprising an actuator (170) connected to the partition wall (150) for moving the partition wall (150) between a first position (P1) and a second position (P2), such that a distance (G) between the outlet (124) of the second channel (120) and the flow redirecting section (140) is greater when the partition wall (150) is in the second position (P2), as compared to when the partition wall (150) is in the first position (P1).

9. The device (100) according to any of claims 6 to 8, wherein
the device (100) comprises a pipe (180) inside which the partition wall (150) is located,
the partition wall (150) is, as seen across the first direction (D1), smaller than the pipe (180), such that the second channel (120) is formed by an interspace between the pipe (180) and an exterior surface (152) of the partition wall (150), and
the partition wall (150) comprises an interior through-flow opening (154) that forms the first channel (110).

10. The device (100) according to claim 9, wherein the filtering section (130) extends from the partition wall (150), in a direction towards the pipe (180) at the inlet (122) of the second channel (120).

11. The device (100) according to claim 9 or 10, wherein the flow redirecting section (140) is arranged on an interior surface (186) of the pipe (180).

12. The device (100) according to any of claims 1 to 5, comprising a first pipe (182) that forms the first channel (110) and an adjacent second pipe (184) that forms the second channel (120), the second pipe (184) comprising at its outlet (124) a part (142) that forms the flow redirecting section (140).

13. A system (200) for processing a food product (F) containing particles (P), the system (200) comprising
a food processing arrangement (220) configured to process the food (F),
a pump (210) for feeding the product (F) to the food processing arrangement (220), and
a device (100) according to any of the preceding claims for creating a backpressure in the food processing arrangement (220).

14. A method (300) for creating a backpressure in a fluid line (160) configured to convey a food product (F) containing particles (P), the method (300) comprising:
conveying (310) the product (F) in a first direction (D1) in a first channel (110) that has an inlet (112) and an outlet (114),
receiving (320), with a second channel (120) that has an inlet (122) and an outlet (124) in fluid communication with the first channel (110), a part (F2) of the product (F) from the first channel (110) and thereafter returning (330) said part (F2) to the first channel (110),
letting through (340), during the receiving (320) of said part (F2) of the product (F) and via a filtering section (130) arranged at the inlet (122) of the second channel (120), said part (F2) of the product (F) from the first channel (110) into the second channel (120), while blocking (350) particles (P) contained in the product (F1),
redirecting (360), with a flow redirecting section (140) arranged at the outlet (124) of the second channel (120), said part (F2) of the product (F) in a second direction (D2) when said part (F2) is returned to the first channel (110) from the second channel (120), wherein the second direction (D2) is at least partially opposite to the first direction (D1) for creating the backpressure in the fluid line (160).

15. A method (400) for processing a food product (F) containing particles (P), the method (400) comprising
pumping (410) the product (F) to a food processing arrangement (220),
processing (420) the food (F) in the food processing arrangement (220), and
creating (430) a backpressure in the food processing arrangement (220) by performing a method (300) according to claim 14.

## Patentansprüche

1. Vorrichtung (100) zum Erzeugen eines Gegendrucks in einer Fluidleitung (160), die dafür gestaltet ist, ein Lebensmittelprodukt (F), das Partikel (P) enthält, zu befördern, wobei die Vorrichtung (100) umfasst:
einen ersten Kanal (110), der einen Einlass (112) und einen Auslass (114) umfasst, zum Befördern des Produkts (F) in einer ersten Richtung (D1),
einen zweiten Kanal (120), der einen Einlass (122) und einen Auslass (124) umfasst, in Fluidverbindung mit dem ersten Kanal (110) zum Aufnehmen eines Teils (F2) des Produkts (F) aus dem ersten Kanal (110) und anschließend Zurückführen des Teils (F2) zu dem ersten Kanal (110),
einen Filterabschnitt (130), der an dem Einlass (122) des zweiten Kanals (120) angeordnet ist und dafür gestaltet ist, den Teil (F2) des Produkts (F) von dem ersten Kanal (110) in den zweiten Kanal (120) durchzulassen, während Partikel (P), die in dem Produkt (F) enthalten sind, zurückgehalten werden, und
einen Flussumleitabschnitt (140), der an dem Auslass (124) des zweiten Kanals (120) angeordnet ist und dafür gestaltet ist, den Teil (F2) des Produkts (F) in eine zweite Richtung (D2) umzuleiten, wenn der Teil (F2) aus dem zweiten Kanal (120) in den ersten Kanal (110) zurückgeführt wird, wobei die zweite Richtung (D2) wenigstens zum Teil der ersten Richtung (D1) entgegengesetzt ist, um den Gegendruck in der Fluidleitung (160) zu erzeugen.

2. Vorrichtung (100) nach Anspruch 1, wobei der Flussumleitabschnitt (140) eine Flussumleitfläche (142) umfasst, wobei die Flussumleitfläche (142) dafür gestaltet ist, den Teil (F2) des Produkts (F), der aus dem zweiten Kanal (120) zurückgeführt wird, in den ersten Kanal (110) in der zweiten Richtung (D2) umzuleiten.

3. Vorrichtung (100) nach Anspruch 2, wobei die Flussumleitfläche (142) mit einem Winkel (α) in dem Bereich von 0 bis 45 Grad bezogen auf die erste Richtung (D1) an der Stelle des Auslasses (124) des zweiten Kanals (120) angeordnet ist.

4. Vorrichtung (100) nach einem der vorstehenden Ansprüche, wobei die Größe des kleinsten Querschnitts der Durchflussfläche des zweiten Kanals (120) in dem Bereich von 20 % bis 50 % der Größe des kleinsten Querschnitts der Durchflussfläche des ersten Kanals (110) liegt.

5. Vorrichtung (100) nach einem der vorstehenden Ansprüche, wobei der Filterabschnitt (130) eine Vielzahl von Öffnungen (132) umfasst, von denen jede in wenigstens einer Richtung der entsprechenden Öffnung (132) eine Ausdehnung von höchstens 4 mm aufweist.

6. Vorrichtung (100) nach einem der vorstehenden Ansprüche, wobei der zweite Kanal (120) innerhalb des ersten Kanals (110) angeordnet ist und durch wenigstens eine Trennwand (150) definiert wird, die den zweiten Kanal (120) von dem ersten Kanal (110) trennt.

7. Vorrichtung (100) nach Anspruch 6, wobei der Flussumleitabschnitt (140) benachbart zu dem Auslass (124) des zweiten Kanals (120) und mit einem Abstand (G) von 10 bis 30 mm zu dem zweiten Kanal (120) angeordnet ist, wie entlang der ersten Richtung (D1) gesehen.

8. Vorrichtung (100) nach Anspruch 6 oder 7, umfassend einen Aktor (170), der mit der Trennwand (150) verbunden ist, um die Trennwand (150) zwischen einer ersten Position (P1) und einer zweiten Position (P2) zu bewegen, so dass ein Abstand (G) zwischen dem Auslass (124) des zweiten Kanals (120) und dem Flussumleitabschnitt (140) größer ist, wenn sich die Trennwand (150) in der zweiten Position (P2) befindet, im Vergleich dazu, wenn sich die Trennwand (150) in der ersten Position (P1) befindet.

9. Vorrichtung (100) nach einem der Ansprüche 6 bis 8, wobei
die Vorrichtung (100) ein Rohr (180) umfasst, in dem die Trennwand (150) angeordnet ist,
die Trennwand (150), wie quer zu der ersten Richtung (D1) gesehen, kleiner als das Rohr (180) ist, so dass der zweite Kanal (120) durch einen Zwischenraum zwischen dem Rohr (180) und einer Außenfläche (152) der Trennwand (150) gebildet wird, und
die Trennwand (150) eine innere Durchflussöffnung (154) aufweist, die den ersten Kanal (110) bildet.

10. Vorrichtung (100) nach Anspruch 9, wobei der Filterabschnitt (130) von der Trennwand (150) in einer Richtung zu dem Rohr (180) an dem Einlass (122) des zweiten Kanals (120) verläuft.

11. Vorrichtung (100) nach Anspruch 9 oder 10, wobei der Flussumleitabschnitt (140) an einer Innenfläche (186) des Rohrs (180) angeordnet ist.

12. Vorrichtung (100) nach einem der Ansprüche 1 bis 5, umfassend ein erstes Rohr (182), das den ersten Kanal (110) bildet, und ein benachbartes zweites Rohr (184), das den zweiten Kanal (120) bildet, wobei das zweite Rohr (184) an seinem Auslass (124) einen Teil (142) umfasst, der den Flussumleitabschnitt (140) bildet.

13. System (200) zur Verarbeitung eines Lebensmittelprodukts (F), das Partikel (P) enthält, wobei das System (200) umfasst
eine Lebensmittelverarbeitungsanordnung (220), die dafür gestaltet ist, das Lebensmittel (F) zu verarbeiten,
eine Pumpe (210) zum Zuführen des Produkts (F) zu der Lebensmittelverarbeitungsanordnung (220), und
eine Vorrichtung (100) nach einem der vorstehenden Ansprüche zum Erzeugen eines Gegendrucks in der Lebensmittelverarbeitungsanordnung (220).

14. Verfahren (300) zum Erzeugen eines Gegendrucks in einer Fluidleitung (160), die dafür gestaltet ist, ein Lebensmittelprodukt (F), das Partikel (P) enthält, zu befördern, wobei das Verfahren (300) umfasst:
Befördern (310) des Produkts (F) in einer ersten Richtung (D1) in einem ersten Kanal (110), der einen Einlass (112) und einen Auslass (114) aufweist,
Aufnehmen (320) eines Teils (F2) des Produkts (F) von dem ersten Kanal (110) mit einem zweiten Kanal (120), der einen Einlass (122) und einen Auslass (124) aufweist, in Fluidverbindung mit dem ersten Kanal (110) und anschließend Zurückführen (330) des Teils (F2) zu dem ersten Kanal (110),
Durchlassen (340) des Teils (F2) des Produkts (F) aus dem ersten Kanal (110) in den zweiten Kanal (120) während des Aufnehmens (320) des Teils (F2) des Produkts (F) über einen Filterabschnitt (130), der an dem Einlass (122) des zweiten Kanals (120) angeordneten ist, während in dem Produkt (F1) enthaltene Partikel (P) zurückgehalten werden (350),
Umleiten (360) des Teils (F2) des Produkts (F) mit einem Flussumleitabschnitt (140), der an dem Auslass (124) des zweiten Kanals (120) angeordnet ist, in eine zweite Richtung (D2), wenn der Teil (F2) aus dem zweiten Kanal (120) in den ersten Kanal (110) zurückgeführt wird, wobei die zweite Richtung (D2) wenigstens zum Teil der ersten Richtung (D1) entgegengesetzt ist, um den Gegendruck in der Fluidleitung (160) zu erzeugen.

15. Verfahren (400) zur Verarbeitung eines Lebensmittelprodukts (F), das Partikel (P) enthält, wobei das Verfahren (400) umfasst
Pumpen (410) des Produkts (F) zu einer Lebensmittelverarbeitungsanordnung (220),
Verarbeiten (420) des Lebensmittels (F) in der Lebensmittelverarbeitungsanordnung (220) und
Erzeugen (430) eines Gegendrucks in der Lebensmittelverarbeitungsanordnung (220) durch Durchführen eines Verfahrens (300) nach Anspruch 14.

## Revendications

1. Dispositif (100) destiné à créer une contre-pression dans une conduite de fluide (160) conçue pour transporter un produit alimentaire (F) contenant des particules (P), le dispositif (100) comprenant :
un premier canal (110) comprenant une entrée (112) et une sortie (114), destiné à transporter le produit (F) dans une première direction (D1),
un deuxième canal (120) comprenant une entrée (122) et une sortie (124) en communication fluidique avec le premier canal (110), destiné à recevoir une partie (F2) du produit (F) provenant du premier canal (110) et renvoyer ensuite ladite partie (F2) au premier canal (110),
une section de filtration (130) disposée à l'entrée (122) du deuxième canal (120) et conçue pour laisser passer ladite partie (F2) du produit (F) provenant du premier canal (110) à l'intérieur du deuxième canal (120), tout en bloquant les particules (P) contenues dans le produit (F), et
une section de réacheminement d'écoulement (140) disposée à la sortie (124) du deuxième canal (120) et conçue pour réacheminer ladite partie (F2) du produit (F) dans une deuxième direction (D2) quand ladite partie (F2) est renvoyée au premier canal (110) depuis le deuxième canal (120), la deuxième direction (D2) étant au moins partiellement opposée à la première direction (D1) pour créer la contre-pression dans la conduite de fluide (160).

2. Dispositif (100) selon la revendication 1, dans lequel la section de réacheminement d'écoulement (140) comprend une surface de réacheminement d'écoulement (142), la surface de réacheminement d'écoulement (142) étant conçue pour réacheminer la partie (F2) du produit (F) renvoyée depuis le deuxième canal (120) à l'intérieur du premier canal (110) dans la deuxième direction (D2).

3. Dispositif (100) selon la revendication 2, dans lequel la surface de réacheminement d'écoulement (142) est disposée avec un angle (α) dans la plage de 0 à 45 degrés par rapport à la première direction (D1) à l'emplacement de la sortie (124) du deuxième canal (120).

4. Dispositif (100) selon l'une quelconque des revendications précédentes, dans lequel la taille de la plus petite section d'écoulement du deuxième canal (120) se situe dans la plage de 20 % à 50 % de la plus petite section d'écoulement du premier canal (110).

5. Dispositif (100) selon l'une quelconque des revendications précédentes, dans lequel la section de filtration (130) comprend une pluralité d'ouvertures (132) dont chacune a, dans au moins une direction de l'ouverture respective (132), une extension de 4 mm maximum.

6. Dispositif (100) selon l'une quelconque des revendications précédentes, dans lequel le deuxième canal (120) est disposé à l'intérieur du premier canal (110) et est défini par au moins une paroi de séparation (150) qui sépare le deuxième canal (120) du premier canal (110).

7. Dispositif (100) selon la revendication 6, dans lequel la section de réacheminement d'écoulement (140) est disposée au voisinage de la sortie (124) du deuxième canal (120) et avec une distance (G) de 10 à 30 mm jusqu'au deuxième canal (120), quand on regarde dans la première direction (D1).

8. Dispositif (100) selon la revendication 6 ou 7, comprenant un actionneur (170) raccordé à la paroi de séparation (150) pour déplacer la paroi de séparation (150) entre une première position (P1) et une deuxième position (P2), de telle sorte qu'une distance (G) entre la sortie (124) du deuxième canal (120) et la section de réacheminement d'écoulement (140) est plus grande quand la paroi de séparation (150) se trouve dans la deuxième position (P2), par rapport à quand la paroi de séparation (150) se trouve dans la première position (P1).

9. Dispositif (100) selon l'une quelconque des revendications 6 à 8,
le dispositif (100) comprenant un tuyau (180) à l'intérieur duquel se situe la paroi de séparation (150), la paroi de séparation (150) étant, quand on regarde transversalement à la première direction (D1), plus petite que le tuyau (180), de telle sorte que le deuxième canal (120) est formé par un espace intermédiaire entre le tuyau (180) et une surface extérieure (152) de la paroi de séparation (150), et
la paroi de séparation (150) comprenant une ouverture d'écoulement intérieur (154) qui forme le premier canal (110).

10. Dispositif (100) selon la revendication 9, dans lequel la section de filtration (130) s'étend depuis la paroi de séparation (150), dans une direction allant vers le tuyau (180) à l'entrée (122) du deuxième canal (120).

11. Dispositif (100) selon la revendication 9 ou 10, dans lequel la section de réacheminement d'écoulement (140) est disposée sur une surface intérieure (186) du tuyau (180).

12. Dispositif (100) selon l'une quelconque des revendications 1 à 5, comprenant un premier tuyau (182) qui forme le premier canal (110) et un deuxième tuyau adjacent (184) qui forme le deuxième canal (120), le deuxième tuyau (184) comprenant à sa sortie (124) une partie (142) qui forme la section de réacheminement d'écoulement (140).

13. Système (200) destiné à transformer un produit alimentaire (F) contenant des particules (P), le système (200) comprenant
un agencement de transformation d'aliment (220) conçu pour transformer l'aliment (F),
une pompe (210) destinée à alimenter avec le produit (F) l'agencement de transformation d'aliment (220), et
un dispositif (100) selon l'une quelconque des revendications précédentes destiné à créer une contre-pression dans l'agencement de transformation d'aliment (220).

14. Procédé (300) destiné à créer une contre-pression dans une conduite de fluide (160) conçue pour transporter un produit alimentaire (F) contenant des particules (P), le procédé (300) comprenant :
le transport (310) du produit (F) dans une première direction (D1) dans un premier canal (110) qui comporte une entrée (112) et une sortie (114),
la réception (320), avec un deuxième canal (120) qui comporte une entrée (122) et une sortie (124) en communication fluidique avec le premier canal (110), d'une partie (F2) du produit (F) provenant du premier canal (110) et le renvoi ultérieur (330) de ladite partie (F2) au premier canal (110),
le passage (340), pendant la réception (320) de ladite partie (F2) du produit (F) et par le biais d'une section de filtration (130) disposée à l'entrée (122) du deuxième canal (120), de ladite partie (F2) du produit (F) provenant du premier canal (110) à l'intérieur du deuxième canal (120), tout en bloquant (350) les particules (P) contenues dans le produit (F1),
le réacheminement (360), avec une section de réacheminement d'écoulement (140) disposée à la sortie (124) du deuxième canal (120), de ladite partie (F2) du produit (F) dans une deuxième direction (D2) quand ladite partie (F2) est renvoyée au premier canal (110) depuis le deuxième canal (120), la deuxième direction (D2) étant au moins partiellement opposée à la première direction (D1) pour créer la contre-pression dans la conduite de fluide (160).

15. Procédé (400) destiné à transformer un produit alimentaire (F) contenant des particules (P), le procédé (400) comprenant
le pompage (410) du produit (F) jusqu'à un agencement de transformation d'aliment (220),
la transformation (420) de l'aliment (F) dans l'agencement de transformation d'aliment (220), et
la création (430) d'une contre-pression dans l'agencement de transformation d'aliment (220) par réalisation d'un procédé (300) selon la revendication 14.
